# EUROPEAN PATENT SPECIFICATION

(11) **EP 1 363 199 B1**
(45) Date of publication and mention of the grant of the patent: **16.02.2005**
(21) Application number: 02011032.6
(22) Date of filing: 17.05.2002
(51) Int. Cl.: G06F 17/24, G06F 3/033

(54) **Method and computer system for editing browser documents**
Verfahren und Computersystem zur Bearbeitung von Browser-Dokumente
Procédé et système ordinateur d'édition des documents de browser

(43) Date of publication of application: 19.11.2003
(73) Proprietor: SAP Aktiengesellschaft, 69190 Walldorf (DE)
(72) Inventor: Fildebrandt, Ulf, 68723 Schwetzingen (DE)

(56) References cited:
- EP-A- 0 717 342
- US-A- 5 956 736
- US-A1- 5 845 299
- "Drag and Drop Available Target Indicator" RESEARCH DISCLOSURE, no. 341, September 1992 (1992-09), page 711 XP000320168 Emsworth, GB

## Description

### Field of the Invention

The present invention generally relates to electronic data processing, and more particularly, relates to method, computer program product and system for editing browser-documents.

### Background of the Invention

Editing structured documents, such as XML- or HTML-documents that can be visualized by a conventional browser, such as the Microsoft Internet explorer is known by those skilled in the art. Structured documents are referred to as browser-documents, hereinafter. In a browser-document. The position of a specific component of the browser-document depends on other components that can include the specific component. The components of browser-documents are referred to as browser-components, hereinafter. Typically, browser-components are structured in a tree structure, wherein one parent browser-component can have multiple child browser-components, thus defining a sub-tree in the tree structure. The root-node in the tree structure corresponds to the browser-document.

A state of the art graphical editor, such as Microsoft Frontpage for HTML documents, deals with browser-components in a tree structure by using, for example, an HTML table-tag for each browser-component. This results in a tree structure of table-tags that corresponds to the tree structure of the browser-components. Each table-tag has a graphical representation that allows a user to place a specific browser-component at a specific location within the graphical editor. The graphical editor recognizes plain HTML elements and assigns a corresponding table-tag representation. Another such editor is disclosed in US 5 845 299 A1 (Arora et al.).

There is an ongoing need to improve graphical editing of browser-documents that use complex browser-components, which include a plurality of further browser-components and where HTML representations, such as table-tags, cannot be used to represent the complex browser-components in the graphical editor.

### Summary of the Invention

Hence, the technical problem of editing complex browser-components of a browser-document with a graphical editor is solved by a method according to claim 1. Further embodiments of the invention are a computer system according to claim 9 and a computer program product according to claim 16.

By creating representations of browser-components and indicating to the user possible target-locations where browser-components can be moved to, a graphical editor system that is operated according to an embodiment of the invention allows the user to improve system control when editing the browser-document.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of a computer system that can be used with an embodiment of the invention;
- FIGS. 2A-2C: illustrate an embodiment of a graphical user-interface of the computer system when operated according to the invention.;
- FIGS. 3A-3B: illustrate an embodiment of a browser-document that can be used with an embodiment of the invention; and
- FIG. 4: illustrates a simplified flowchart of a method for editing the browser-document according to one embodiment of the invention.

### Detailed Description of the Invention

Wherever possible, the same reference numbers will be used throughout the drawings to refer to the same or like parts. For convenience of explanation a list of references is provided prior to the claims.

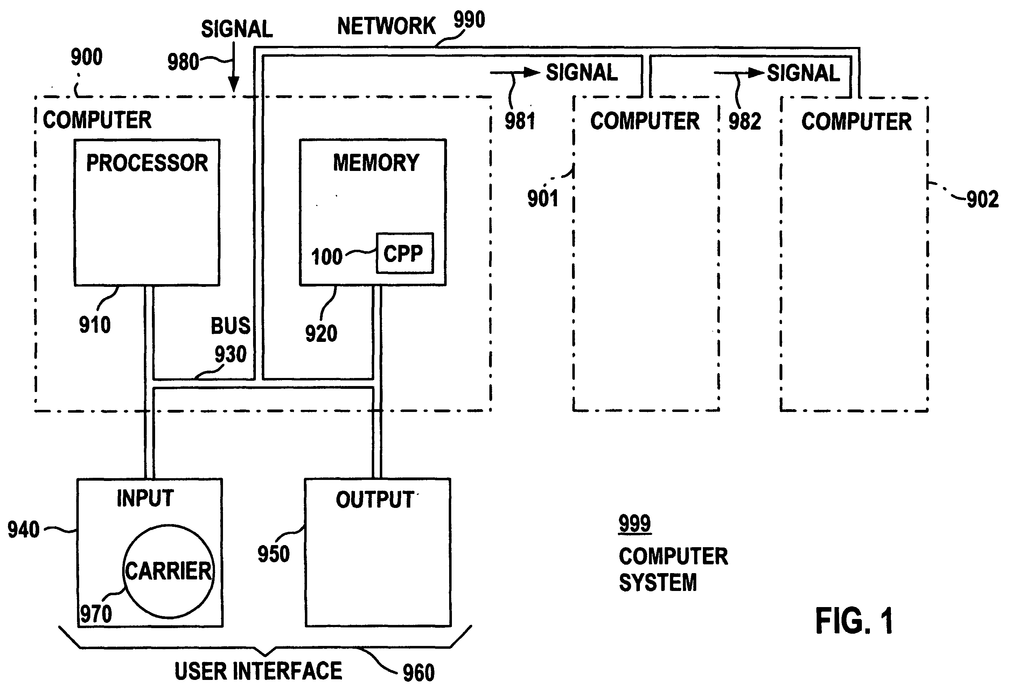

FIG. 1 illustrates a simplified block diagram of an exemplary computer system, that implements embodiments of the present invention. Computer system 999 includes computer 900 and has a plurality of further computers 901, 902 (or 90q, with q=0...Q-1, Q any number).

Computer 900 can be connected to further computers 901, 902 via computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.
Computer and program are closely related. As used hereinafter, phrases, such as "the computer provides" and "the program provides", are convenient abbreviation to express actions by a computer that is controlled by a program.

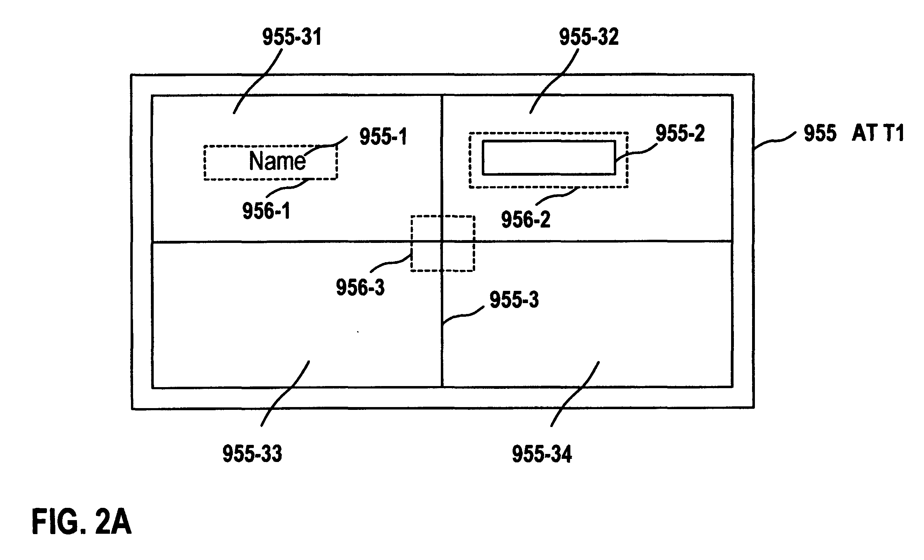

FIGS. 2A-2C illustrate one embodiment of graphical user-interface 955 (GUI) of computer system 999 (cf. FIG. 1), when operated according to the invention. Preferably, GUI 955 is presented via a conventional browser. GUI 955 is exemplary and explanatory only. Those skilled in the art can implement any graphical user-interface used by any application, such as financial applications, logistics applications, strategic management applications or any other software application, as an alternative embodiment of the invention.

FIG. 2A illustrates GUI 955 prompting the user on output device 950 (cf. FIG. 1) at T1. GUI 955 includes name component 955-1, input component 955-2 and grid component 955-3. Grid component 955-3 further includes cell components 955-31 to 955-34. For example, computer system 999 receives a control signal from the user (e.g. a control key sequence via a keyboard or a mouse signal, such as a double-click) indicating the user's desire to edit the appearance of GUI 955. Computer system 999 then indicates selectable components for editing of GUI 955 to the user. In the example, name component 955-1, input component 955-2 and grid component 955-3 are selectable components. In an alternative embodiment cell components 955-31 to 955-34 can also be selectable components. For example, as shown in FIG. 2A, editable components can be indicated to the user by graphical representations, such as dashed squares 956-1, 956-2, 956-3 that relate to the corresponding selectable components 955-1, 955-2, 955-3. Alternative graphical representations of an editable component can be highlighting, blinking or marking the editable component with a marker of any shape or colour.

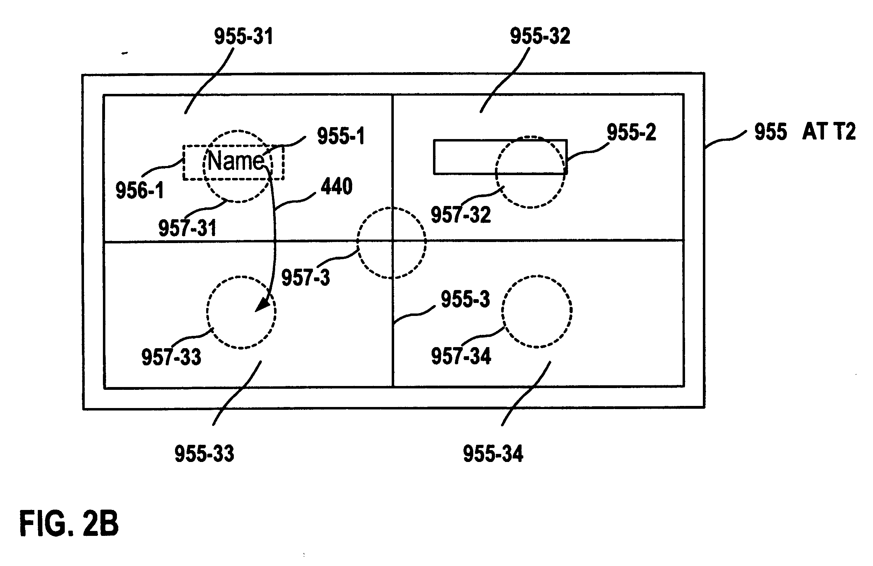

FIG. 2B shows GUI 955 at T2 after name-component 955-1 has been selected at its predefined location via square 956-1 on display device 950 (cf. FIG. 1) for moving. For example, computer system 999 can receive a selection signal from the user when the user clicks on dashed square 956-1 at T1 (cf. FIG. 2A) by using a mouse device as input device 940 (cf. FIG. 1). For example, when name-component 955-1 is selected, square 956-1 can change its appearance from a dashed square to a solid square. Once name-component 955-1 is selected, in one embodiment of the invention computer system 999 indicates target-locations 957-3, 957-31 to 957-34 on display device 950 to the user via dashed circles. Alternatively, target locations can be highlighted, blinking or marked with a marker of any shape, colour or sound. In the example, target locations 957-31 to 957-34 correspond to cell components 955-31 to 955-34, respectively. Target-location 957-3 corresponds to grid component 955-3. In other words, GUI 955-2 at T2 indicates to the user that name component 955-1 can be moved or copied either to one of the cell components 955-31 to 955-34 or to grid component 955-3. The user can also simply delete selected name-component 955-1. In the example, name component 955-1 is moved 440 from predefined location 956-1 to target-location 957-33 (cell component 955-33).

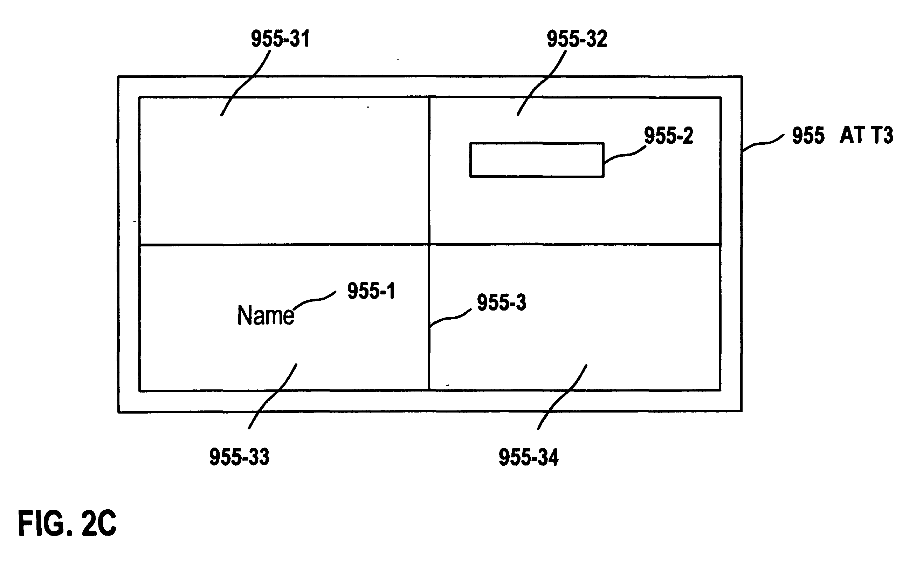

FIG. 2C shows GUI 955 at T3 after having moved 440 name component 955-1 to cell component 955-33. In case name component 955-1 is moved to target-location 957-33, name component 955-1 can replace grid component 955-3.

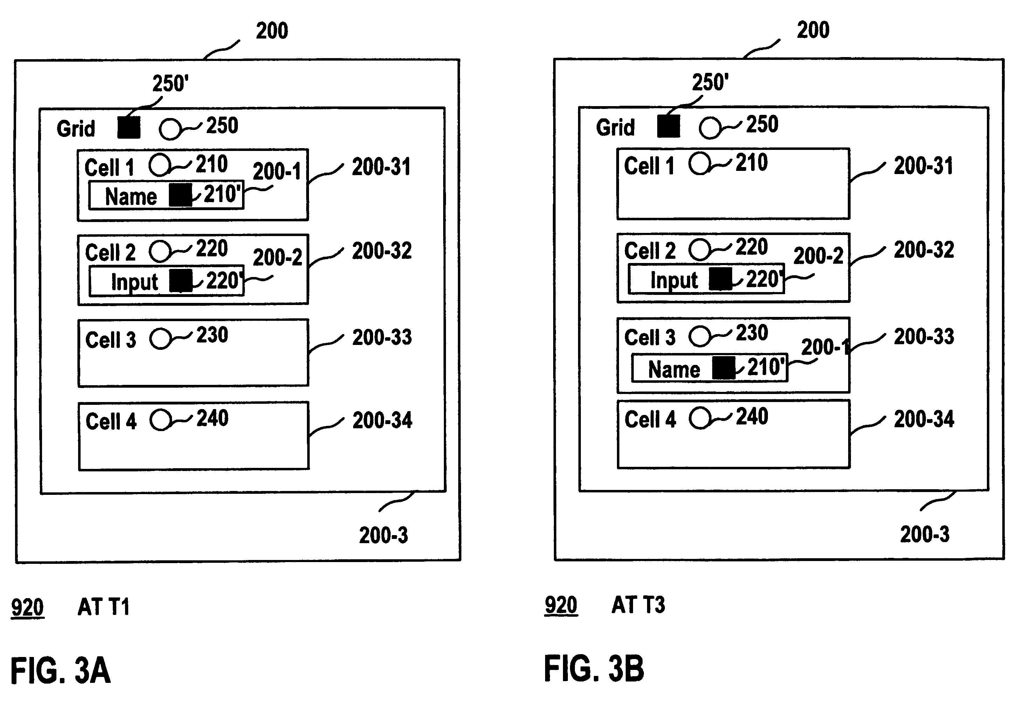

FIGS. 3A, 3B illustrate an embodiment of browser-document 200 at time points T1 and T3 (also cf. FIGS. 2A, 2C). Browser-document 200 can be an HTML document or an XML document or any structured document in a browser compatible format. In one embodiment of computer system 999 browser-document 200 is stored in memory 920 of computer 900. In alternative embodiments, browser-document 200 can be stored in any other storage device in computer system 999 (e.g. in memory 921 of computer 901).

At T1 (cf. FIG. 3A), browser-document 200 includes browser-component 200-3 (Grid), which further includes browser-components 200-31 to 200-34 (Cells 1 to 4). Cell 1 further includes browser-component 200-1 (Name) and cell 2 includes further browser-component 200-2 (Input). Referring back to the example of GUI 955 at T1 in FIG. 2A, browser-component 200-3 is visualized as grid component 955-3. Browser-components 200-31 to 200-34 are visualized as cell components 955-31 to 955-34. Browser-component 200-1 (Name) is visualized as name component 955-1 and browser-component 200-2 (Input) is visualized as input component 955-2. Because browser-component 200-3 (Grid) includes a plurality of further browser-components it can be considered as a complex browser-component.

In the example, source-markers 210', 220' and 250' are assigned to selectable browser-components 200-1 (Name), 200-2 (Input) and 200-3 (Grid), respectively. Each source-marker is illustrated by a dark square that forms a portion of the selectable browser-component it is assigned to. Each source-marker indicates that the browser-component that it is assigned to can be selected by the user for editing. In the example, cells 1-4 have no source-markers assigned. However, in a further example source-markers can also be assigned to cells 1-4. Referring back to the example of FIG. 2A, dashed squares 956-1, 956-2 and 956-3 correspond to visualizations of source-markers 210', 220' and 250', respectively. Further, a source-marker visualization (e.g. 956-1) is a graphical representation of the selectable browser-component (e.g. specific selectable browser-component 200-1) where the corresponding source-marker (e.g. 210') is assigned to.

In the example, target-marker 250 is assigned to target browser-component 200-3 (Grid) and target-markers 210 to 240 are assigned to target browser-components 200-31 to 200-34 (Cell 1 to 4), respectively. Each target-marker is illustrated by a circle that forms a portion of the target browser-component it is assigned to. Each target-marker indicates that the browser-component that it is assigned to can be a possible target of another browser-component, which is selected by the user. Referring back to the example of FIG. 2B, dashed circles 957-3, 957-31 to 957-34 correspond to visualizations of target-markers 250, 210 to 240, respectively. Further, a target-marker visualization (e.g. 957-33) is a graphical representation of the target browser-component (e.g. specific target browser-component 200-33) where the corresponding target-marker (e.g. 230) is assigned to.

At T3, browser-document 200 reflects the changes that the user applied to GUI 955 while interacting with computer system 999 as described in FIGS. 2A, 2B to change the appearance of GUI 955 as shown in FIG. 2C. Computer system 999 has automatically adjusted browser-document 200. Browser-component 200-1 (Name) is moved to specific target browser-component 200-33 (Cell 3) because the user has selected the corresponding target-location 957-33 (cf. FIG. 2B). In another example, any other target-location can be selected by the user and computer system 999 adjusts browser-document 200 accordingly. In a further embodiment of the invention browser-component 200-1 (Name) is copied (instead of being moved) to specific target browser-component 200-33 (Cell 3). In a still further embodiment of the invention browser-component 200-1 (Name) is completely deleted from browser-document 200 after the user has selected the corresponding graphical representation 956-1 (cf. FIG. 2A).

By using source-markers and target-markers to indicate to the user via corresponding graphical representations which browser-components of a browser-document can be selected for editing, complex browser-components, such as grids, tables or other complex controls become editable through a graphical user interface visualized by a conventional browser. Preferably, source-markers and target-markers can be implemented by those skilled in the art as meta-data of the browser-document, wherein the meta-data can be stored as a portion of an interface, repository or file.

For those skilled in the art, the following coding sections (sources) give a more detailed XML-notation example of browser-document 200 that can be used in the example of FIGS. 2A to 2C. By using meta-data for the implementation of source- and target-markers, the source- and target-markers do not become visible in the (source) coding section.

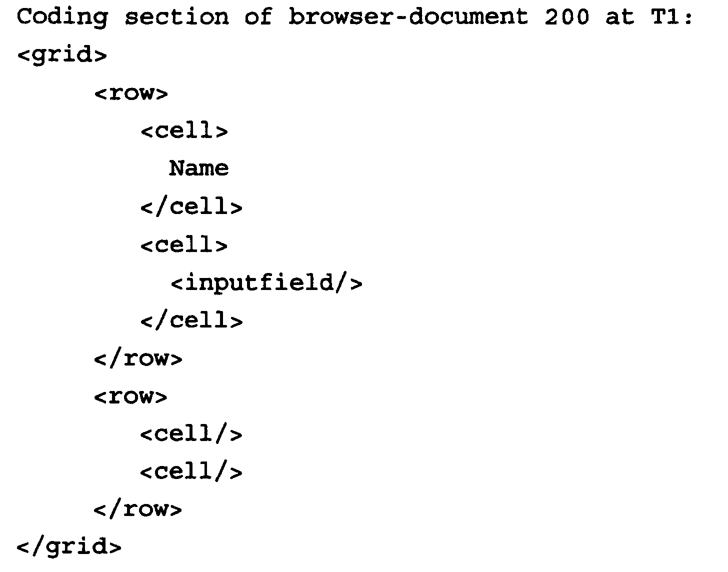

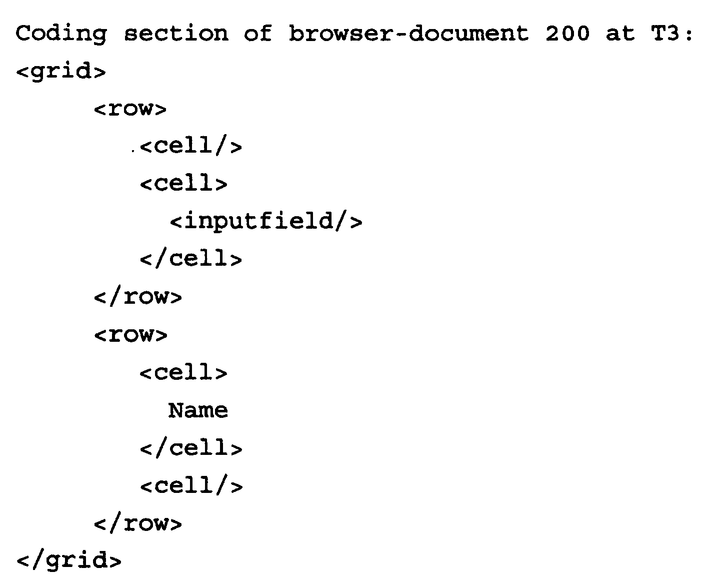

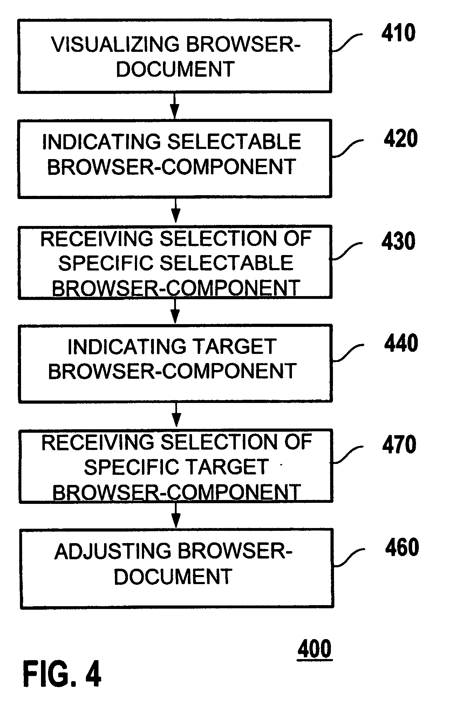

FIG. 4 illustrates a simplified flowchart of method 400 for editing browser-document 200 according to one embodiment of the present invention. Browser-document 200 includes browser-components 200-1, 200-2, 200-3, 200-31, 200-32, 200-33, 200-34 (cf. FIG. 3A). For example, method 400 can be executed by computer 900 (cf. FIG. 1) of computer system 999 (cf. FIG. 1). Computer program product 100 (cf. FIG. 1) includes instructions that cause processor 910 of computer 900 to execute the steps of method 400. Computer program product 100 can be stored in data carrier 970 or carried by signal 981. Preferably, computer program product 100 is loaded into memory 920 of computer 900.

Method 400 includes the steps visualizing 410, indicating selectable browser-component 420, receiving selection of specific selectable browser-component 430, indicating target browser-component 440, receiving selection of specific target browser-component 450 and adjusting browser-document 460. The steps are now explained in detail.

In the visualizing step 410 browser-document 200 is displayed on display device 950. For example, a conventional browser running on computer 900 presents browser-document 200, which can be an HTML-, XML-, WML- or XHTML-document, as a graphical human interface 955 to the user.

In the "indicating selectable browser-component step 420", computer 900 indicates at least one selectable browser-component (e.g. 200-1, 200-2, 200-3, cf. FIG. 3A) on the display device 950 to the user. For example, the user can trigger step 420 with a control signal, such as a mouse click or a control key sequence, by using input device 940. Preferably, display device 950 displays a graphical representation (e.g. 956-1, 956-2, 956-3, cf. FIG. 2A) of the at least one selectable browser-component (e.g. 200-1, 200-2, 200-3). The graphical representation (e.g. 956-1, 956-2, 956-3) of the at least one selectable browser-component (e.g. 200-1, 200-2, 200-3, cf. FIG. 3A) is a visualization of a corresponding source-marker (e.g. 210', 220', 250', cf. FIG. 3A) that is assigned to the at least one selectable browser-component (200-1, 200-2, 200-3).

For example, the user can then make a selection of specific selectable browser-component 200-1 via a mouse click on specific selectable browser-component 200-1.

In the "receiving selection of specific selectable browser-component step 430", computer 900 receives the selection of specific selectable browser-component 200-1, preferably via input device 940.

In the "indicating target browser-component step 440", display device 950 indicates at least one target browser-component 200-3, 200-31, 200-32, 200-33, 200-34 to the user, wherein the target-component can serve as target for the specific selectable browser-component 200-1. For example, for indicating a graphical representation (e.g. 957-3, 957-31, 957-32, 957-33, 957-34) of the at least one target browser-component (e.g. 200-3, 200-31, 200-32, 200-33, 200-34) is presented to the user on display device 950. Preferably, the graphical representation (e.g. 957-3, 957-31, 957-32, 957-33, 957-34) of the at least one target browser-component (e.g. 200-3, 200-31, 200-32, 200-33, 200-34) is a visualization of a corresponding target-marker (e.g. 210, 220, 230, 240, 250) that is assigned to the at least one target browser-component (e.g. 200-3, 200-31, 200-32, 200-33, 200-34).

For example, the user can then make a selection of specific target browser-component 200-33 via a mouse click on specific selectable browser-component 200-33 or by dragging specific selectable browser-component 200-1 and dropping it on specific target browser-component 200-33.

In the "receiving selection of specific target browser-component step 450", computer 900 receives the selection of specific target browser-component 200-33, preferably via input device 940 (cf. FIG. 1).

In the "adjusting browser-document step 460", computer 900 adjusts browser-document 200, according to the selections received from the user. In one embodiment of the invention computer 900 moves specific selectable browser-component 200-1 to specific target browser-component 200-33 so that specific target browser-component 200-33 includes specific selectable browser-component 200-1. In another embodiment computer 900 copies specific selectable browser-component 200-1 to specific target browser-component 200-33 so that specific target browser-component 200-33 includes the specific selectable browser-component 200-1 and also source browser-component 200-31 still includes specific selectable browser-component 200-1. In another embodiment of the invention computer 900 deletes specific selectable browser-component 200-1 completely from browser-document 200. Those skilled in the art can use functions, such as context menus that are launched by the user via a mouse button or a control key sequence, to allow the user a choice between the different embodiments of the "adjusting browser-document step" 460.

| Reference numbers | |
|---|---|
| **Reference** | **Description** |
| 100 | Computer program product |
| 200 | Browser-document |
| 200-x, 200-xx | Browser-components |
| 210', 220', 250' | Source-markers |
| 210 - 250 | Target-markers |
| 400 | Method |
| 4xx | Method steps |
| 999 | Computer system |
| 900, 901, 902 | Computers |
| 910, 911, 912 | Processors |
| 920, 921, 922 | Memories |
| 940 | Input device |
| 950 | Output device |
| 955 | Graphical user interface (GUI) |
| 955-xx | GUI components |
| 956-x | Representations of source-markers |
| 957-x, 957-xx | Target locations, representations of target-markers |
| 960 | User interface |
| 970 | Program carrier (computer readable device) |
| 980 | Program signal |

## Claims

1. A method (400) for editing a browser-document (200) having a browser-component (200-3) that includes a plurality of further browser-components (200-1, 200-2, 200-31, 200-32, 200-33, 200-34), comprising the following steps:
visualizing (410) the browser-document (200) on a display device (950);
indicating (420) at least one selectable browser-component (200-1, 200-2, 200-3) on the display device (950);
receiving (430) a selection of a specific selectable browser-component (200-1) ;
indicating (440) on the display device (950) a plurality of target browser-components (200-3, 200-31, 200-32, 200-33, 200-34) for the specific selectable browser-component (200-1), wherein the plurality of target browser-components comprises the browser-component (200-3) and at least one further browser-component of the plurality of further browser-components (200-31, 200-32, 200-33, 200-34);
receiving (450) a selection of a specific target browser-component (200-33) from the plurality of target browser-components; and
adjusting (460) the browser-document (200), accordingly.

2. The method (400) of claim 1, wherein in the visualizing step (410) the browser-document (200), which is selected from the group of HTML-document, XML-document, WML document and XHTML-document, is presented as a graphical human interface (955) on the display device (950).

3. The method (400) of claims 1 or 2, wherein the indicating at least one selectable browser-component step (420) displays a graphical representation (956-1, 956-2, 956-3) of the at least one selectable browser-component (200-1, 200-2, 200-3).

4. The method (400) of claim 3, wherein the graphical representation (956-1, 956-2, 956-3) of the at least one selectable browser-component (200-1, 200-2, 200-3) is a visualization of a corresponding source-marker (210', 220', 250') that is assigned to the at least one selectable browser-component (200-1, 200-2, 200-3).

5. The method (400) of any of the claims 1 to 4, wherein the indicating a plurality of target browser-components step (440) displays graphical representations (957-3, 957-31, 957-32, 957-33, 957-34) of the plurality of target browser-components (200-3, 200-31, 200-32, 200-33, 200-34).

6. The method (400) of claim 5, wherein the graphical representations (957-3, 957-31, 957-32, 957-33, 957-34) of the target browser-components (200-3, 200-31, 200-32, 200-33, 200-34) are visualizations of corresponding target-markers (210, 220, 230, 240, 250) that are assigned to the corresponding target browser-components (200-3, 200-31, 200-32, 200-33, 200-34).

7. The method (400) of any of the claims 1 to 6, wherein the adjusting step (460) moves the specific selectable browser-component (200-1) to the specific target browser-component (200-33) so that the specific target browser-component (200-33) comprises the specific selectable browser-component (200-1).

8. The method (400) of any of the claims 1 to 6, wherein the adjusting step (460) copies the specific selectable browser-component (200-1) to the specific target browser-component (200-33) so that the specific target browser-component (200-33) comprises the specific selectable browser-component (200-1).

9. A computer system (999) for editing a browser-document (200) having a browser-component (200-3) that includes a plurality of further browser-components (200-1, 200-2, 200-31, 200-32, 200-33, 200-34), wherein the browser-document (200) is stored in a memory (920) of the computer system (999); the computer system (999) comprising:
a display device (950) for visualizing (410) the browser-document (200);
an input device (940) for receiving (430) a selection of a specific selectable browser-component (200-1) and for receiving (450) a selection of a specific target browser-component (200-33) from a plurality of target browser-components (200-3, 200-31, 200-32, 200-33, 200-34);
a computer (900) for indicating (420) at least one selectable browser-component (200-1, 200-2, 200-3) on the display device (950) and for indicating (440) on the display device (950) the plurality of target browser-components (200-3, 200-31, 200-32, 200-33, 200-34) for the specific selectable browser-component (200-1), wherein the plurality of target browser-components comprises the browser-component (200-3) and at least one further browser-component of the plurality of further browser-components (200-31, 200-32, 200-33, 200-34), and for adjusting (460) the browser-document (200), according to the selection of the specific selectable browser-component (200-1) and the selection of the specific target browser-component (200-33).

10. The computer system (999) of claim 9, wherein the display device (950) displays a graphical representation (956-1, 956-2, 956-3) of the at least one selectable browser-component (200-1, 200-2, 200-3).

11. The computer system (999) of claim 10, wherein the graphical representation (956-1, 956-2, 956-3) of the at least one selectable browser-component (200-1, 200-2, 200-3) is a visualization of a corresponding source-marker (210', 220', 250') that is assigned to the at least one selectable browser-component (200-1, 200-2, 200-3).

12. The computer system (999) of any of the claims 9 to 11, wherein the display device (950) displays graphical representations (957-3, 957-31, 957-32, 957-33, 957-34) of the plurality of target browser-components (200-3, 200-31, 200-32, 200-33, 200-34).

13. The computer system (999) of claim 12, wherein the graphical representations (957-3, 957-31, 957-32, 957-33, 957-34) of the plurality of target browser-components (200-3, 200-31, 200-32, 200-33, 200-34) are visualizations of corresponding target-markers (210, 220, 230, 240, 250) that are assigned to the corresponding target browser-components (200-3, 200-31, 200-32, 200-33, 200-34).

14. The computer system (999) of any of the claims 9 to 13, wherein the computer (900) moves the specific selectable browser-component (200-1) to the specific target browser-component (200-33) so that the specific target browser-component (200-33) comprises the specific selectable browser-component (200-1).

15. The computer system (999) of any of the claims 9 to 13, wherein the computer (900) copies the specific selectable browser-component (200-1) to the specific target browser-component (200-33) so that the specific target browser-component (200-33) comprises the specific selectable browser-component (200-1).

16. A computer program product (100) comprising a plurality of instructions for editing a browser-document (200) that has a browser-component (200-3) that includes a plurality of further browser-components (200-1, 200-2, 200-31, 200-32, 200-33, 200-34); the computer program product (100), when loaded into a memory (920) of a computer (900), causing at least one processor (910) of the computer (900) to execute the following steps:
visualizing (410) the browser-document (200) on a display device (950);
indicating (420) at least one selectable browser-component (200-1, 200-2, 200-3) on the display device (950);
receiving (430) a selection of a specific selectable browser-component (200-1);
indicating (440) on the display device (950) a plurality of target browser-components (200-3, 200-31, 200-32, 200-33, 200-34) for the specific selectable browser-component (200-1), wherein the plurality of target browser-components comprises the browser-component (200-3) and at least one further browser-component of the plurality of further browser-components (200-31, 200-32, 200-33, 200-34);
receiving (450) a selection of a specific target browser-component (200-33) from the plurality of target browser-components; and
adjusting (460) the browser-document (200), accordingly.

17. The computer program product (100) of claim 16 comprising further instructions for displaying a graphical representation (956-1, 956-2, 956-3) of the at least one selectable browser-component (200-1, 200-2, 200-3).

18. The computer program product (100) of claim 17, wherein the graphical representation (956-1, 956-2, 956-3) of the at least one selectable browser-component (200-1, 200-2, 200-3) is a visualization of a corresponding source-marker (210', 220', 250') that is assigned to the at least one selectable browser-component (200-1, 200-2, 200-3).

19. The computer program product (100) of any of the claims 16 to 18 comprising further instructions for displaying graphical representations (957-3, 957-31, 957-32, 957-33, 957-34) of the plurality of target browser-components (200-3, 200-31, 200-32, 200-33, 200-34).

20. The computer program product (100) of claim 19, wherein the graphical representations (957-3, 957-31, 957-32, 957-33, 957-34) of the plurality of target browser-components (200-3, 200-31, 200-32, 200-33, 200-34) are visualizations of corresponding target-markers (210, 220, 230, 240, 250) that are assigned to the corresponding target browser-components (200-3, 200-31, 200-32, 200-33, 200-34).

21. The computer program product (100) of any of the claims 16 to 20, comprising further instructions for moving the specific selectable browser-component (200-1) to the specific target browser-component (200-33) so that the specific target browser-component (200-33) comprises the specific selectable browser-component (200-1).

22. The computer program product (100) of any of the claims 16 to 20, comprising further instructions for copying the specific selectable browser-component (200-1) to the specific target browser-component (200-33) so that the specific target browser-component (200-33) comprises the specific selectable browser-component (200-1).

23. The computer program product (100) of any of the claims 16 to 22, wherein the corresponding source-marker (210', 220', 250') and the corresponding target-marker (210, 220, 230, 240, 250) are implemented as meta-data of the browser-document (200) and the meta-data is stored as a portion of a data-structure selected from the group of interface, repository and file.

## Patentansprüche

1. Verfahren (400) zum Editieren eines Browser-Dokuments (200) mit einer Browser-Komponente (200-3), die eine Vielzahl weiterer Browser-Komponenten (200-1, 200-2, 200-31, 200-32, 200-33, 200-34) enthält, mit den folgenden Schritten:
Visualisieren (410) des Browser-Dokuments (200) auf einem Anzeigegerät (950);
Anzeigen (420) mindestens einer wählbaren Browser-Komponente (200-1, 200-2, 200-3) auf dem Anzeigegerät (950);
Empfangen (430) einer Auswahl einer spezifischen wählbaren Browser-Komponente (200-1);
Anzeigen (440) einer Vielzahl von Ziel-Browser-Komponenten (200-3, 200-31, 200-32, 200-33, 200-34) für die spezifische wählbare Browser-Komponente (200-1) auf dem Anzeigegerät (950), wobei die Vielzahl von Ziel-Browser-Komponenten die Browser-Komponente (200-3) und mindestens eine weitere Browser-Komponente der Vielzahl weiterer Browser-Komponenten (200-31, 200-32, 200-33, 200-34) umfaßt;
Empfangen (450) einer Auswahl einer spezifischen Ziel-Browser-Komponente (200-33) aus der Vielzahl von Ziel-Browser-Komponenten und
entsprechendes Einstellen (460) des Browser-Dokuments (200).

2. Verfahren (400) nach Anspruch 1, wobei in dem Visualisierungsschritt (410) das Browser-Dokument (200), das aus der Gruppe HTML-Dokument, XML-Dokument, WML-Dokument und XHTML-Dokument ausgewählt wird, als eine graphische Humanschnittstelle (955) auf dem Anzeigegerät (950) präsentiert wird.

3. Verfahren (400) nach Anspruch 1 oder 2, wobei der Schritt (420) des Anzeigens mindestens einer wählbaren Browser-Komponente eine graphische Repräsentation (956-1, 956-2, 956-3) der mindestens einen wählbaren Browser-Komponente (200-1, 200-2, 200-3) anzeigt.

4. Verfahren (400) nach Anspruch 3, wobei die graphische Repräsentation (956-1, 956-2, 956-3) der mindestens einen wählbaren Browser-Komponente (200-1, 200-2, 200-2) eine Visualisierung einer entsprechenden Quellenmarkierung (210', 220', 250') ist, die der mindestens einen wählbaren Browser-Komponente (200-1, 200-2, 200-3) zugewiesen wird.

5. Verfahren (400) nach einem der Ansprüche 1 bis 4, wobei der Schritt (440) des Anzeigens einer Vielzahl von Ziel-Browser-Komponenten graphische Repräsentationen (957-3, 957-31, 957-32, 957-33, 957-34) der Vielzahl von Ziel-Browser-Komponenten (200-3, 200-31, 200-32, 200-33, 200-34) anzeigt.

6. Verfahren (400) nach Anspruch 5, wobei die graphischen Repräsentationen (957-3, 957-31, 957-32, 957-33, 957-34) der Ziel-Browser-Dokumente (200-3, 200-31, 200-32, 200-33, 200-34) Visualisierungen entsprechender Zielmarkierungen (210, 220, 230, 240, 250) sind, die den entsprechenden Ziel-Browser-Komponenten (200-3, 200-31, 200-32, 200-33, 200-34) zugewiesen werden.

7. Verfahren (400) nach einem der Ansprüche 1 bis 6, wobei der Einstellschritt (460) die spezifische wählbare Browser-Komponente (200-1) zu der spezifischen Ziel-Browser-Komponente (200-33) verschiebt, so daß die spezifische Ziel-Browser-Komponente (200-33) die spezifische wählbare Browser-Komponente (200-1) umfaßt.

8. Verfahren (400) nach einem der Ansprüche 1 bis 6, wobei der Einstellschritt (460) die spezifische wählbare Browser-Komponente (200-1) zu der spezifischen Ziel-Browser-Komponente (200-33) kopiert, so daß die spezifische Ziel-Browser-Komponente (200-33) die spezifische wählbare Browser-Komponente (200-1) umfaßt.

9. Computersystem (999) zum Editieren eines Browser-Dokuments (200) mit einer Browser-Komponente (200-3), die eine Vielzahl weiterer Browser-Komponenten (200-1, 200-2, 200-31, 200-32, 200-33, 200-34) enthält, wobei das Browser-Dokument (200) in einem Speicher (920) des Computersystems (999) gespeichert ist; wobei das Computersystem (999) folgendes umfaßt:
ein Anzeigegerät (950) zum Visualisieren (410) des Browser-Dokuments (200);
ein Eingabegerät (940) zum Empfangen (430) einer Auswahl einer spezifischen wählbaren Browser-Komponente (200-1) und zum Empfangen (450) einer Auswahl einer spezifischen Ziel-Browser-Komponente (200-33) aus einer Vielzahl von Ziel-Browser-Komponenten (200-3, 200-31, 200-32, 200-33, 200-34);
einen Computer (900) zum Anzeigen (420) mindestens einer wählbaren Browser-Komponente (200-1, 200-2, 200-3) auf dem Anzeigegerät (950) und zum Anzeigen (440) der Vielzahl von Ziel-Browser-Komponenten (200-3, 200-31, 200-32, 200-33, 200-34) für die spezifische wählbare Browser-Komponente (200-1) auf dem Anzeigegerät (950), wobei die Vielzahl von Ziel-Browser-Komponenten die Browser-Komponente (200-3) und mindestens eine weitere Browser-Komponente der Vielzahl von weiteren Browser-Komponenten (200-31, 200-32, 200-33, 200-34) umfaßt, und zum Einstellen (460) des Browser-Dokuments (200) gemäß der Auswahl der spezifischen wählbaren Browser-Komponente (200-1) und der Auswahl der spezifischen Ziel-Browser-Komponente (200-33).

10. Computersystem (999) nach Anspruch 9, wobei das Anzeigegerät (950) eine graphische Repräsentation (956-1, 956-2, 956-3) der mindestens einen wählbaren Browser-Komponente (200-1, 200-2, 200-3) anzeigt.

11. Computersystem (999) nach Anspruch 10, wobei die graphische Repräsentation (956-1, 956-2, 956-3) der mindestens einen wählbaren Browser-Komponente (200-1, 200-2, 200-3) eine Visualisierung einer entsprechenden Quellenmarkierung (210', 220', 250') ist, die der mindestens einen wählbaren Browser-Komponente (200-1, 200-2, 200-3) zugewiesen wird.

12. Computersystem (999) nach einem der Ansprüche 9 bis 11, wobei das Anzeigegerät (950) graphische Repräsentationen (957-3, 957-31, 957-32, 957-33, 957-34) der Vielzahl von Ziel-Browser-Komponenten (200-3, 200-31, 200-32, 200-33, 200-34) anzeigt.

13. Computersystem (999) nach Anspruch 12, wobei die graphischen Repräsentationen (957-3, 957-31, 957-32, 957-33, 957-34) der Vielzahl von Ziel-Browser-Komponenten (200-3, 200-31, 200-32, 200-33, 200-34) Visualisierungen der entsprechenden Zielmarkierungen (210, 220, 230, 240, 250) sind, die den entsprechenden Ziel-Browser-Komponenten (200-3, 200-31, 200-32, 200-33, 200-34) zugewiesen werden.

14. Computersystem (999) nach einem der Ansprüche 9 bis 13, wobei der Computer (900) die spezifische wählbare Browser-Komponente (200-1) zu der spezifischen Ziel-Browser-Komponente (200-33) verschiebt, so daß die spezifische Ziel-Browser-Komponente (200-33) die spezifische wählbare Browser-Komponente (200-1) umfaßt.

15. Computersystem (999) nach einem der Ansprüche 9 bis 13, wobei der Computer (900) die spezifische wählbare Browser-Komponente (200-1) zu der spezifischen Ziel-Browser-Komponente (200-33) kopiert, so daß die spezifische Ziel-Browser-Komponente (200-33) die spezifische wählbare Browser-Komponente (200-1) umfaßt.

16. Computerprogrammprodukt (100), das eine Vielzahl von Anweisungen zum Editieren eines Browser-Dokuments (200) umfaßt, das eine Browser-Komponente (200-3) aufweist, die eine Vielzahl weiterer Browser-Komponenten (200-1, 200-2, 200-31, 200-32, 200-33, 200-34) enthält; wobei das Computerprogrammprodukt (100), wenn es in einen Speicher (920) eines Computers (900) geladen wird, bewirkt, daß mindestens ein Prozessor (910) des Computers (900) die folgenden Schritte ausführt:
Visualisieren (410) des Browser-Dokuments (200) auf einem Anzeigegerät (950);
Anzeigen (420) mindestens einer wählbaren Browser-Komponente (200-1, 200-2, 200-3) auf dem Anzeigegerät (950);
Empfangen (430) einer Auswahl einer spezifischen wählbaren Browser-Komponente (200-1);
Anzeigen (440) einer Vielzahl von Ziel-Browser-Komponenten (200-3, 200-31, 200-32, 200-33, 200-34) für die spezifische wählbare Browser-Komponente (200-1) auf dem Anzeigegerät (950), wobei die Vielzahl von Ziel-Browser-Komponenten die Browser-Komponente (200-3) und mindestens eine weitere Browser-Komponente der Vielzahl weiterer Browser-Komponenten (200-31, 200-32, 200-33, 200-34) umfaßt;
Empfangen (450) einer Auswahl einer spezifischen Ziel-Browser-Komponente (200-33) aus der Vielzahl von Ziel-Browser-Komponenten und
entsprechendes Einstellen (460) des Browser-Dokuments (200).

17. Computerprogrammprodukt (100) nach Anspruch 16, das weitere Anweisungen zum Anzeigen einer graphischen Repräsentation (956-1, 956-2, 956-3) der mindestens einen wählbaren Browser-Komponente (200-1, 200-2, 200-3) umfaßt.

18. Computerprogrammprodukt (100) nach Anspruch 17, wobei die graphische Repräsentation (956-1, 956-2, 956-3) der mindestens einen wählbaren Browser-Komponente (200-1, 200-2, 200-3) eine Visualisierung einer entsprechenden Quellenmarkierung (210', 220', 250') ist, die der mindestens einen wählbaren Browser-Komponente (200-1, 200-2, 200-3) zugewiesen wird.

19. Computerprogrammprodukt (100) nach einem der Ansprüche 16 bis 18, weiterhin mit weiteren Anweisungen zum Anzeigen graphischer Repräsentationen (957-3, 957-31, 957-32, 957-33, 957-34) der Vielzahl von Ziel-Browser-Komponenten (200-3, 200-31, 200-32, 200-33, 200-34).

20. Computerprogrammprodukt (100) nach Anspruch 19, wobei die graphischen Repräsentationen (957-3, 957-31, 957-32, 957-33, 957-34) der Vielzahl von Ziel-Browser-Komponenten (200-3, 200-31, 200-32, 200-33, 200-34) Visualisierungen entsprechender Zielmarkierungen (210, 220, 230, 240, 250) sind, die entsprechenden Ziel-Browser-Komponenten (200-3, 200-31, 200-32, 200-33, 200-34) zugewiesen werden.

21. Computerprogrammprodukt (100) nach einem der Ansprüche 16 bis 20, mit weiteren Anweisungen zum Verschieben der spezifischen wählbaren Browser-Komponente (200-1) zu der spezifischen Ziel-Browser-Komponente (200-33), so daß die spezifische Ziel-Browser-Komponente (200-33) die spezifische wählbare Browser-Komponente (200-1) umfaßt.

22. Computerprogrammprodukt (100) nach einem der Ansprüche 16 bis 20, mit weiteren Anweisungen zum Kopieren der spezifischen wählbaren Browser-Komponente (200-1) zu der spezifischen Ziel-Browser-Komponente (200-33), so daß die spezifische Ziel-Browser-Komponente (200-33) die spezifische wählbare Browser-Komponente (200-1) umfaßt.

23. Computerprogrammprodukt (100) nach einem der Ansprüche 16 bis 22, wobei die entsprechende Quellenmarkierung (210', 220', 250') und die entsprechende Zielmarkierung (210, 220, 230, 240, 250) als Metadaten des Browser-Dokuments (200) implementiert sind und die Metadaten als Teil einer Datenstruktur gespeichert werden, die aus der Gruppe von Schnittstelle, Repositorium und Datei ausgewählt wird.

## Revendications

1. Procédé (400) d'édition d'un document de navigateur (200) comprenant un composant de navigateur (200-3) comportant une pluralité d'autres composants de navigateur (200-1, 200-2, 200-31, 200-32, 200-33, 200-34), comprenant les étapes suivantes :
visualisation (410) du document de navigateur (200) sur un dispositif d'affichage (950) ;
indication (420) d'au moins un composant de navigateur sélectionnable (200-1, 200-2, 200-3) sur le dispositif d'affichage (950) ;
réception (430) d'une sélection d'un composant de navigateur sélectionnable (200-1) particulier ;
indication (440) sur le dispositif d'affichage (950) d'une pluralité de composants de navigateur cibles (200-3, 200-31, 200-32, 200-33, 200-34) pour le composant de navigateur sélectionnable (200-1) particulier, la pluralité de composants de navigateur cibles comprenant le composant de navigateur (200-3) et au moins un autre composant de navigateur de la pluralité d'autres composants de navigateur (200-31, 200-32, 200-33, 200-34) ;
réception (450) d'une sélection d'un composant de navigateur cible (200-33) particulier parmi la pluralité de composants de navigateur cibles ; et
mise à jour (460) du document de navigateur (200) en conséquence.

2. Procédé (400) selon la revendication 1, dans lequel, à l'étape de visualisation (410), le document de navigateur (200) sélectionné dans le groupe constitué d'un document HTML, d'un document XML, d'un document WML et d'un document XHTML, est présenté sous la forme d'une interface graphique homme-machine (955) sur le dispositif d'affichage (950).

3. Procédé (400) selon les revendications 1 ou 2, dans lequel l'étape d'indication d'au moins un composant de navigateur sélectionnable (420) affiche une représentation graphique (956-1, 956-2, 956-3) dudit au moins un composant de navigateur sélectionnable (200-1, 200-2, 200-3).

4. Procédé (400) selon la revendication 3, dans lequel la représentation graphique (956-1, 956-2, 956-3) dudit au moins un composant de navigateur sélectionnable (200-1, 200-2, 200-3) est une visualisation d'un repère source correspondant (210', 220', 250') affecté audit au moins un composant de navigateur sélectionnable (200-1, 200-2, 200-3).

5. Procédé (400) selon l'une quelconque des revendications 1 à 4, dans lequel l'étape d'indication d'une pluralité de composants de navigateur cibles (440) affiche des représentations graphiques (957-3, 957-31, 957-32, 957-33, 957-34) de la pluralité de composants de navigateur cibles (200-3, 200-31, 200-32, 200-33, 200-34).

6. Procédé (400) selon la revendication 5, dans lequel les représentations graphiques (957-3, 957-31, 957-32, 957-33, 957-34) des composants de navigateur cibles (200-3, 200-31, 200-32, 200-33, 200-34) sont des visualisations de repères cibles correspondants (210, 220, 230, 240, 250) affectés aux composants de navigateur cibles correspondants (200-3, 200-31, 200-32, 200-33, 200-34).

7. Procédé (400) selon l'une quelconque des revendications 1 à 6, dans lequel l'étape de mise à jour (460) déplace le composant de navigateur sélectionnable (200-1) particulier vers le composant de navigateur cible (200-33) particulier de façon à ce que le composant de navigateur cible (200-33) particulier comprenne le composant de navigateur sélectionnable (200-1) particulier.

8. Procédé (400) selon l'une quelconque des revendications 1 à 6, dans lequel l'étape de mise à jour (460) copie le composant de navigateur sélectionnable (200-1) particulier vers le composant de navigateur cible (200-33) particulier de façon à ce que le composant de navigateur cible (200-33) particulier comprenne le composant de navigateur sélectionnable (200-1) particulier.

9. Système informatique (999) d'édition d'un document de navigateur (200) comprenant un composant de navigateur (200-3) comportant une pluralité d'autres composants de navigateur (200-1, 200-2, 200-31, 200-32, 200-33, 200-34), dans lequel le document de navigateur (200) est stocké dans une mémoire (920) du système informatique (999) ; le système informatique (999) comprenant :
un dispositif d'affichage (950) pour visualiser (410) le document de navigateur (200) ;
un dispositif d'entrée (940) pour recevoir (430) une sélection d'un composant de navigateur sélectionnable (200-1) particulier et pour recevoir (450) une sélection d'un composant de navigateur cible (200-33) particulier parmi une pluralité de composants de navigateur cibles (200-3, 200-31, 200-32, 200-33, 200-34) ;
un ordinateur (900) pour indiquer (420) au moins un composant de navigateur sélectionnable (200-1, 200-2, 200-3) sur le dispositif d'affichage (950) et pour indiquer (440) sur le dispositif d'affichage (950) la pluralité de composants de navigateur cibles (200-3, 200-31, 200-32, 200-33, 200-34) pour le composant de navigateur sélectionnable (200-1) particulier, la pluralité de composants de navigateur cibles comprenant le composant de navigateur (200-3) et au moins un autre composant de navigateur de la pluralité d'autres composants de navigateur (200-31, 200-32, 200-33, 200-34), et pour mettre à jour (460) le document de navigateur (200) en fonction de la sélection du composant de navigateur sélectionnable (200-1) particulier et de la sélection du composant de navigateur cible (200-33) particulier.

10. Système informatique (999) selon la revendication 9, dans lequel le dispositif d'affichage (950) affiche une représentation graphique (956-1, 956-2, 956-3) dudit au moins un composant de navigateur sélectionnable (200-1, 200-2, 200-3).

11. Système informatique (999) selon la revendication 10, dans lequel la représentation graphique (956-1, 956-2, 956-3) dudit au moins un composant de navigateur sélectionnable (200-1, 200-2, 200-3) est une visualisation d'un repère source correspondant (210', 220', 250') affecté audit au moins un composant de navigateur sélectionnable (200-1, 200-2, 200-3).

12. Système informatique (999) selon l'une quelconque des revendications 9 à 11, dans lequel le dispositif d'affichage (950) affiche des représentations graphiques (957-3, 957-31, 957-32, 957-33, 957-34) de la pluralité de composants de navigateur cibles (200-3, 200-31, 200-32, 200-33, 200-34).

13. Système informatique (999) selon la revendication 12, dans lequel les représentations graphiques (957-3, 957-31, 957-32, 957-33, 957-34) de la pluralité de composants de navigateur cibles (200-3, 200-31, 200-32, 200-33, 200-34) sont des visualisations de repères cibles correspondants (210, 220, 230, 240, 250) affectés aux composants de navigateur cibles correspondants (200-3, 200-31, 200-32, 200-33, 200-34).

14. Système informatique (999) selon l'une quelconque des revendications 9 à 13, dans lequel l'ordinateur (900) déplace le composant de navigateur sélectionnable (200-1) particulier vers le composant de navigateur cible (200-33) particulier de façon à ce que le composant de navigateur cible (200-33) particulier comprenne le composant de navigateur sélectionnable (200-1) particulier.

15. Système informatique (999) selon l'une quelconque des revendications 9 à 13, dans lequel l'ordinateur (900) copie le composant de navigateur sélectionnable (200-1) particulier vers le composant de navigateur cible (200-33) particulier de façon à ce que le composant de navigateur cible (200-33) particulier comprenne le composant de navigateur sélectionnable (200-1) particulier.

16. Produit programme d'ordinateur (100) comprenant une pluralité d'instructions pour éditer un document de navigateur (200) comprenant un composant de navigateur (200-3) comportant une pluralité d'autres composants de navigateur (200-1, 200-2, 200-31, 200-32, 200-33, 200-34), le produit programme d'ordinateur (100), lorsqu'il est chargé dans une mémoire (920) d'un ordinateur (900), amenant au moins un processeur (910) de l'ordinateur (900) à exécuter les étapes suivantes :
visualisation (410) du document de navigateur (200) sur un dispositif d'affichage (950) ;
indication (420) d'au moins un composant de navigateur sélectionnable (200-1, 200-2, 200-3) sur le dispositif d'affichage (950) ;
réception (430) d'une sélection d'un composant de navigateur sélectionnable (200-1) particulier ;
indication (440) sur le dispositif d'affichage (950) d'une pluralité de composants de navigateur cibles (200-3, 200-31, 200-32, 200-33, 200-34) pour le composant de navigateur sélectionnable (200-1) particulier, la pluralité de composants de navigateur cibles comprenant le composant de navigateur (200-3) et au moins un autre composant de navigateur de la pluralité d'autres composants de navigateur (200-31, 200-32, 200-33, 200-34) ;
réception (450) d'une sélection d'un composant de navigateur cible (200-33) particulier parmi la pluralité de composants de navigateur cibles ; et
mise à jour (460) du document de navigateur (200) en conséquence.

17. Produit programme d'ordinateur (100) selon la revendication 16, comprenant d'autres instructions pour afficher une représentation graphique (956-1, 956-2, 956-3) dudit au moins un composant de navigateur sélectionnable (200-1, 200-2, 200-3).

18. Produit programme d'ordinateur (100) selon la revendication 17, dans lequel la représentation graphique (956-1, 956-2, 956-3) dudit au moins un composant de navigateur sélectionnable (200-1, 200-2, 200-3) est une visualisation d'un repère source correspondant (210', 220', 250') affecté audit au moins un composant de navigateur sélectionnable (200-1, 200-2, 200-3).

19. Produit programme d'ordinateur (100) selon l'une quelconque des revendications 16 à 18, comprenant d'autres instructions pour afficher des représentations graphiques (957-3, 957-31, 957-32, 957-33, 957-34) de la pluralité de composants de navigateur cibles (200-3, 200-31, 200-32, 200-33, 200-34).

20. Produit programme d'ordinateur (100) selon la revendication 19, dans lequel les représentations graphiques (957-3, 957-31, 957-32, 957-33, 957-34) de la pluralité de composants de navigateur cibles (200-3, 200-31, 200-32, 200-33, 200-34) sont des visualisations de repères cibles correspondants (210, 220, 230, 240, 250) affectés aux composants de navigateur cibles correspondants (200-3, 200-31, 200-32, 200-33, 200-34).

21. Produit programme d'ordinateur (100) selon l'une quelconque des revendications 16 à 20, comprenant d'autres instructions pour déplacer le composant de navigateur sélectionnable (200-1) particulier vers le composant de navigateur cible (200-33) particulier de façon à ce que le composant de navigateur cible (200-33) particulier comprenne le composant de navigateur sélectionnable (200-1) particulier.

22. Produit programme d'ordinateur (100) selon l'une quelconque des revendications 16 à 20, comprenant d'autres instructions pour copier le composant de navigateur sélectionnable (200-1) particulier vers le composant de navigateur cible (200-33) particulier de façon à ce que le composant de navigateur cible (200-33) particulier comprenne le composant de navigateur sélectionnable (200-1) particulier.

23. Produit programme d'ordinateur (100) selon l'une quelconque des revendications 16 à 22, dans lequel le repère source correspondant (210', 220', 250') et le repère cible correspondant (210, 220, 230, 240, 250) sont mis en oeuvre sous la forme de métadonnées du document de navigateur (200) et les métadonnées sont stockées sous la forme d'une partie d'une structure de données choisie dans le groupe constitué d'une interface, d'un référentiel et d'un fichier.
